# EUROPEAN PATENT APPLICATION

(11) **EP 3 989 429 A1**
(43) Date of publication of application: **27.04.2022**
(21) Application number: 20275162.4
(22) Date of filing: 22.10.2020
(51) Int. Cl.: H02M 7/483, H02M 1/00, H01F 27/42

(54) **ELECTRICAL ASSEMBLY**

(71) Applicant: General Electric Technology GmbH, 5400 Baden (CH)
(72) Inventor: LAVAPURO, Jari, FI-33730 Tampere (FI); BREHAUT, Stephane Pierre, 37000 Tours (FR); DE PREVILLE, Guillaume, 78990 Elancourt (FR)
(74) Representative: Potter Clarkson

(57) **Abstract**

An electrical assembly (20) comprises:
a converter-based electrical device (22); and
a transformer (24) for connecting the converter-based electrical device (22) to an AC electrical network (42), a first transformer side (44) of the transformer (24) connected to the converter-based electrical device (22), a second transformer side (46) of the transformer (24) for connection to the AC electrical network (42), the transformer (24) including a plurality of taps, the transformer (24) including a tap changer operable to selectively connect to the or each tap to modify a turn ratio of the transformer (24),
wherein the transformer (24) includes a controller (54b) configured to selectively operate the tap changer in an AC voltage modification mode, responsive to an abnormal operating state of the electrical assembly (20), to modify the turn ratio of the transformer (24) so as to modify an AC voltage at the first transformer side (44).

## Description

This invention relates to an electrical assembly and a method of operating an electrical assembly, preferably for use in high voltage direct current (HVDC) transmission.

In HVDC power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks.

The conversion between DC power and AC power is utilised where it is necessary to interconnect DC and AC networks. In any such power transmission network, converters (i.e. power converters) are required at each interface between AC and DC power to affect the required conversion from AC to DC or from DC to AC.

According to a first aspect of the invention there is provided an electrical assembly comprising:
a converter-based electrical device; and
a transformer for connecting the converter-based electrical device to an AC electrical network, a first transformer side of the transformer connected to the converter-based electrical device, a second transformer side of the transformer for connection to the AC electrical network, the transformer including a plurality of taps, the transformer including a tap changer operable to selectively connect to the or each tap to modify a turn ratio of the transformer,
wherein the transformer includes a controller configured to selectively operate the tap changer in an AC voltage modification mode, responsive to an abnormal operating state of the electrical assembly, to modify the turn ratio of the transformer so as to modify an AC voltage at the first transformer side.

For the purposes of this specification, an abnormal operating state of the electrical assembly covers operating states of the electrical assembly that fall outside the boundaries of the nominal operating state of the electrical assembly. For example, an abnormal operating state of the electrical assembly may include a degraded operating state of the electrical assembly or an overload operating state of the electrical assembly.

The provision of the tap changer enables modification of the transformer's turn ratio to adjust the voltage magnitude between the first and second transformer sides.

Operating the tap changer in the AC voltage modification mode responsive to an abnormal operating state of the electrical assembly enables control over the AC voltage at the first transformer side in order to ensure continued availability of the converter-based electrical device, thus increasing its reliability. Otherwise there would be a need to shut down or disconnect the converter-based electrical device until the abnormal operating state is resolved.

It is envisaged that the operation of the tap changer in the AC voltage modification mode is applicable to different abnormal operating states of the electrical assembly that include, but are not limited to, abnormal operating states of the converter-based electrical device.

Preferably the abnormal operating state of the electrical assembly includes a modified working voltage of the converter-based electrical device, and the controller is configured to selectively operate the tap changer in the AC voltage modification mode to modify the turn ratio of the transformer so as to modify the AC voltage at the first transformer side to correspond to the modified working voltage of the converter-based electrical device. Such configuration of the controller provides a reliable means of ensuring continued availability of the converter-based electrical device.

In embodiments of the invention, the converter-based electrical device may include a plurality of modules, each module including at least one switching element. In such embodiments, each module may include at least one switching element and at least one energy storage device, the or each switching element and the or each energy storage device in each module arranged to be combinable to selectively provide a voltage source.

In embodiments employing the use of modules, the abnormal operating state of the electrical assembly may include a failure of one or more of the modules of the converter-based electrical device. It will be understood that a failure of a module refers to a state of the module in which it is not operational or is unable to perform in accordance with its required ratings.

During normal operation of the converter-based electrical device, each module may support a proportion of the working voltage of the converter-based electrical device. However, in the event of an abnormal operating state of one or more modules, the resulting change in operational capability of the affected module(s) can affect the overall voltage support capability of the modules and thereby affect the working voltage of the converter-based electrical device. This usually requires shut down or disconnection of the converter-based electrical device.

The ability of the tap changer in the AC voltage modification mode responsive to the abnormal operating state of the affected module(s) allows control over the AC voltage at the first transformer side to match the overall voltage support capability of the modules in order to ensure the continued availability of the converter-based electrical device.

It may be desirable in certain situations to reduce the AC voltage at the first transformer side responsive to the abnormal operating state of the electrical assembly.

In further embodiments of the invention, the transformer may include one or more negative taps, the tap-changer may be operable to selectively connect to the or each negative tap to modify a turn ratio of the transformer, and the controller may be configured to selectively operate the tap changer in the AC voltage modification mode to connect with a selected negative tap so as to reduce the AC voltage at the first transformer side.

The ability of the invention to use the tap changer to reduce the AC voltage at the first transformer side in the AC voltage modification mode enables the converter-based electrical device to continue operating in reduced power conditions, which normally would have required shut down or disconnection of the converter-based electrical device. This ensures that the converter-based electrical device continues to be available throughout the abnormal operating state of the electrical assembly.

In such embodiments employing the use of modules, the controller may be configured to selectively operate the tap changer in the AC voltage modification mode to connect with the selected negative tap so as to reduce the AC voltage at the first transformer side as a function of a number of healthy modules in the converter-based electrical device.

By carrying out the operation of the tap changer in the AC voltage modification mode based on the number of healthy modules in the converter-based electrical device, the AC voltage at the first transformer side can be reduced proportionately during the abnormal operating state of the electrical assembly.

In further such embodiments employing the use of modules, the controller may be configured to selectively operate the tap changer in the AC voltage modification mode to connect with the selected negative tap so as to reduce the AC voltage at the first transformer side as a function of a number of failed modules in the converter-based electrical device.

Similarly, by carrying out the operation of the tap changer in the AC voltage modification mode based on the number of failed modules in the converter-based electrical device, the AC voltage at the first transformer side can be reduced proportionately during the abnormal operating state of the electrical assembly.

In embodiments of the invention in which the plurality of modules include one or more redundant modules, the operation of the tap changer in the AC voltage modification mode must be designed to take into account the nominal modules and the or each redundant module with respect to the number of healthy/failed modules. This is because a healthy redundant module can replace a failed nominal module, and so it is not necessary to initiate the AC voltage modification mode until the number of healthy/failed nominal and redundant modules reach a specific threshold number.

For example, the controller may be configured to selectively operate the tap changer in the AC voltage modification mode to connect with the selected negative tap so as to reduce the AC voltage at the first transformer side when the plurality of modules includes at least one redundant module and the number of failed modules in the converter-based electrical device exceeds a number of redundant modules in the converter-based electrical device.

Alternatively, the ability to control the tap changer to reduce the AC voltage at the first transformer side in response to module failure allows the omission of the redundant module(s) from the converter-based electrical device. This is because the redundant module(s) are no longer essential to ensure continued availability of the converter-based electrical device in the event of module failure. Hence, the omission of the redundant module(s) from the converter-based electrical device results in reduced costs and lower losses of the converter-based electrical device.

In embodiments of the invention, the abnormal operating state of the electrical assembly may include a power overload demand.

It may be desirable in certain situations to increase the AC voltage at the first transformer side responsive to the abnormal operating state of the electrical assembly.

In further embodiments of the invention, the transformer may include one or more positive taps, the tap-changer may be operable to selectively connect to the or each positive tap to modify a turn ratio of the transformer, and the controller may be configured to selectively operate the tap changer in the AC voltage modification mode to connect with a selected positive tap so as to increase the AC voltage at the first transformer side.

In such embodiments employing the use of modules, the controller may be configured to selectively operate the tap changer in the AC voltage modification mode to connect with the selected positive tap so as to increase the AC voltage at the first transformer side as a function of a number of healthy modules in the converter-based electrical device when the plurality of modules includes at least one redundant module. This enables the converter-based electrical device to operate at a higher working voltage, which can be used to, for example, provide power overload that is directly proportional to the increase in AC voltage at the first transformer side.

In still further embodiments of the invention, the controller may be configured to selectively operate the tap changer in the AC voltage modification mode, responsive to one or more changes in the abnormal operating state of the electrical assembly, to modify the turn ratio of the transformer so as to further modify the AC voltage at the first transformer side. This ensures that the AC voltage modification mode automatically responds to any change in the abnormal operating state of the electrical assembly that may require a different AC voltage at the first transformer side.

The type and configuration of the converter-based electrical device may vary so long as the converter-based electrical device is connectable to an AC electrical network via the transformer. In a first example, the converter-based electrical device may be or may include a voltage source converter for interconnecting electrical networks. In a second example, the converter-based electrical device may be or may include a static synchronous compensator for connection to an AC electrical network. The converter-based electrical device may include one or more inbuilt energy storage devices, or may be interfaced with one or more external energy storage devices.

According to a second aspect of the invention there is provided a method of operating an electrical assembly, the electrical assembly comprising:
a converter-based electrical device; and
a transformer for connecting the converter-based electrical device to an AC electrical network, a first transformer side of the transformer connected to the converter-based electrical device, a second transformer side of the transformer for connection to the AC electrical network, the transformer including a plurality of taps, the transformer including a tap changer operable to selectively connect to the or each tap to modify a turn ratio of the transformer,
wherein the method comprises the step of selectively operating the tap changer in an AC voltage modification mode, responsive to an abnormal operating state of the electrical assembly, to modify the turn ratio of the transformer so as to modify an AC voltage at the first transformer side.

The features and advantages of the electrical assembly of the first aspect of the invention and its embodiments apply mutatis mutandis to the features and advantages of the method of the second aspect of the invention and its embodiments.

In the method of the invention, the abnormal operating state of the electrical assembly may include a modified working voltage of the converter-based electrical device. The method of the invention may include the step of selectively operating the tap changer in the AC voltage modification mode to modify the turn ratio of the transformer so as to modify the AC voltage at the first transformer side to correspond to the modified working voltage of the converter-based electrical device.

In the method of the invention, the converter-based electrical device may include a plurality of modules, each module including at least one switching element. In such embodiments, each module may include at least one switching element and at least one energy storage device, the or each switching element and the or each energy storage device in each module arranged to be combinable to selectively provide a voltage source.

In the method of the invention, the abnormal operating state of the electrical assembly may include a failure of one or more of the modules of the converter-based electrical device.

In the method of the invention, the transformer may include one or more negative taps, and the tap-changer may be operable to selectively connect to the or each negative tap to modify a turn ratio of the transformer. The method of the invention may include the step of selectively operating the tap changer in the AC voltage modification mode to connect with a selected negative tap so as to reduce the AC voltage at the first transformer side.

The method of the invention may include the step of selectively operating the tap changer in the AC voltage modification mode to connect with the selected negative tap so as to reduce the AC voltage at the first transformer side as a function of a number of healthy modules in the converter-based electrical device.

The method of the invention may include the step of selectively operating the tap changer in the AC voltage modification mode to connect with the selected negative tap so as to reduce the AC voltage at the first transformer side as a function of a number of failed modules in the converter-based electrical device.

The method of the invention may include the step of selectively operating the tap changer in the AC voltage modification mode to connect with the selected negative tap so as to reduce the AC voltage at the first transformer side when the plurality of modules includes at least one redundant module and the number of failed modules in the converter-based electrical device exceeds a number of redundant modules in the converter-based electrical device.

In the method of the invention, the abnormal operating state of the electrical assembly may include a power overload demand.

In the method of the invention, the transformer may include one or more positive taps, and the tap-changer may be operable to selectively connect to the or each positive tap to modify a turn ratio of the transformer. The method of the invention may include the step of selectively operating the tap changer in the AC voltage modification mode to connect with a selected positive tap so as to increase the AC voltage at the first transformer side.

The method of the invention may include the step of selectively operating the tap changer in the AC voltage modification mode to connect with the selected positive tap so as to increase the AC voltage at the first transformer side as a function of a number of healthy modules in the converter-based electrical device when the plurality of modules includes at least one redundant module.

The method of the invention may include the step of selectively operating the tap changer in the AC voltage modification mode, responsive to one or more changes in the abnormal operating state of the electrical assembly, to modify the turn ratio of the transformer so as to further modify the AC voltage at the first transformer side.

In the method of the invention, the converter-based electrical device may be or may include: a voltage source converter for interconnecting electrical networks; or a static synchronous compensator for connection to an AC electrical network.

Each module may vary in configuration, non-limiting examples of which are set out as follows.

In a first exemplary configuration of a module, the or each switching element and the or each energy storage device in the module may be arranged to be combinable to selectively provide a unidirectional voltage source. For example, the module may include a pair of switching elements connected in parallel with an energy storage device in a half-bridge arrangement to define a 2-quadrant unipolar module that can provide zero or positive voltage and can conduct current in two directions.

In a second exemplary configuration of a module, the or each switching element and the or each energy storage device in the module may be arranged to be combinable to selectively provide a bidirectional voltage source. For example, the module may include two pairs of switching elements connected in parallel with an energy storage device in a full-bridge arrangement to define a 4-quadrant bipolar module that can provide negative, zero or positive voltage and can conduct current in two directions.

The plurality of modules may be connected in series to define a chain-link converter. The structure of the chain-link converter permits build-up of a combined voltage across the chain-link converter, which is higher than the voltage available from each of its individual modules, via the insertion of the energy storage devices of multiple modules, each providing its own voltage, into the chain-link converter. In this manner switching of the or each switching element in each module causes the chain-link converter to provide a stepped variable voltage source, which permits the generation of a voltage waveform across the chain-link converter using a step-wise approximation. Hence the chain-link converter is capable of providing a wide range of complex voltage waveforms.

At least one switching element may be a wide-bandgap material based switching element or a silicon semiconductor based switching element. Examples of wide-bandgap materials include, but are not limited to, silicon carbide, boron nitride, gallium nitride and aluminium nitride.

At least one switching element may include at least one self-commutated switching device. The or each self-commutated switching device may be an insulated gate bipolar transistor (IGBT), a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated switching device. The number of switching devices in each switching element may vary depending on the required voltage and current ratings of that switching element.

At least one switching element may further include a passive current check element that is connected in anti-parallel with the or each switching device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

Each energy storage device may be any device that is capable of storing and releasing energy to selectively provide a voltage, e.g. a capacitor, fuel cell or battery.

The configuration of the converter-based electrical device may vary depending on its operating requirements.

In embodiments of the invention, the converter-based electrical device may include at least one converter limb, the or each converter limb including first and second limb portions separated by an AC terminal, each limb portion including a plurality of modules. When the converter-based electrical device is a voltage source converter, the or each converter limb may extend between first and second DC terminals.

In a preferred embodiment of the invention, the converter-based electrical device includes three converter limbs, each of which is connectable via the respective AC terminal to a respective phase of a three-phase AC network. It will be appreciated that the converter-based electrical device may include a different number of converter limbs, each of which is connectable via the respective AC terminal to a respective phase of an AC network with the corresponding number of phases.

It will be understood that the controller may be implemented as a single control unit or a plurality of control units. For example, the controller may include a plurality of control units, each of which is configured to control a respective module or a respective switching element. Each control unit may be configured to communicate with at least one other control unit via telecommunications links and/or a central control unit. Each control unit may be configured to communicate with a central control unit via telecommunications links.

In embodiments employing a plurality of controllers, the controllers may be implemented as separate controllers or may be implemented as part of the same control system. Each controller may be configured to communicate with at least one other controller via telecommunications links and/or a central controller (also known as a global controller). Each controller may be configured to communicate with a central controller via telecommunications links.

It will be appreciated that the use of the terms "first" and "second", and the like, in this patent specification is merely intended to help distinguish between similar features, and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

Preferred embodiments of the invention will now be described, by way of non-limiting examples, with reference to the accompanying drawings in which:
Figure 1 shows an electrical assembly according to a first embodiment of the invention;
Figure 2 shows a voltage source converter of the electrical assembly of Figure 1;
Figure 3 shows a schematic view of an exemplary half-bridge chain-link module;
Figure 4 shows a schematic view of an exemplary full-bridge chain-link module;
Figure 5 shows an electrical assembly according to a second embodiment of the invention; and
Figure 6 shows a static synchronous compensator of the electrical assembly of Figure 5.

The figures are not necessarily to scale, and certain features and certain views of the figures may be shown exaggerated in scale or in schematic form in the interests of clarity and conciseness.

The following embodiments of the invention are used primarily in HVDC applications, but it will be appreciated that the following embodiments of the invention are applicable mutatis mutandis to other applications operating at different voltage levels. The following embodiments of the invention are described with reference to an AC-DC voltage source converter and a static synchronous compensator, but it will be appreciated that the following embodiment of the invention is applicable mutatis mutandis to other types of converter-based electrical devices, such as an AC-AC voltage source converter.

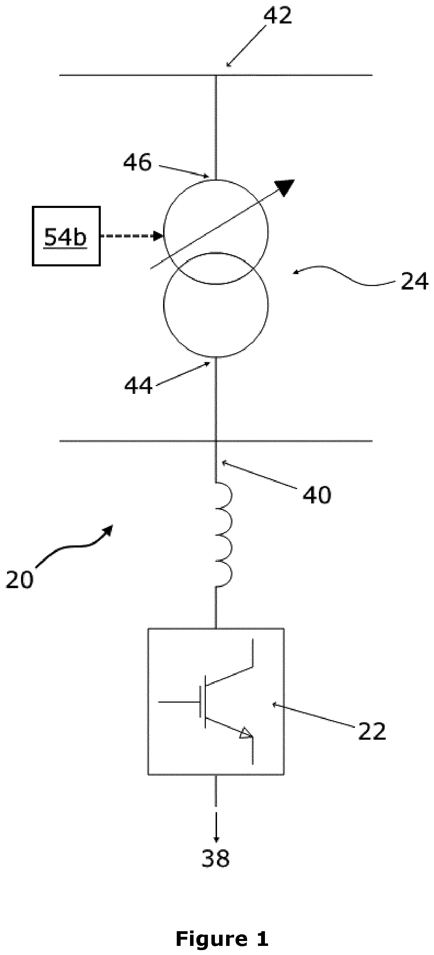

An electrical assembly according to a first embodiment of the invention is shown in Figure 1 and is designated generally by the reference numeral 20. The electrical assembly 20 comprises a voltage source converter 22 and a transformer 24.

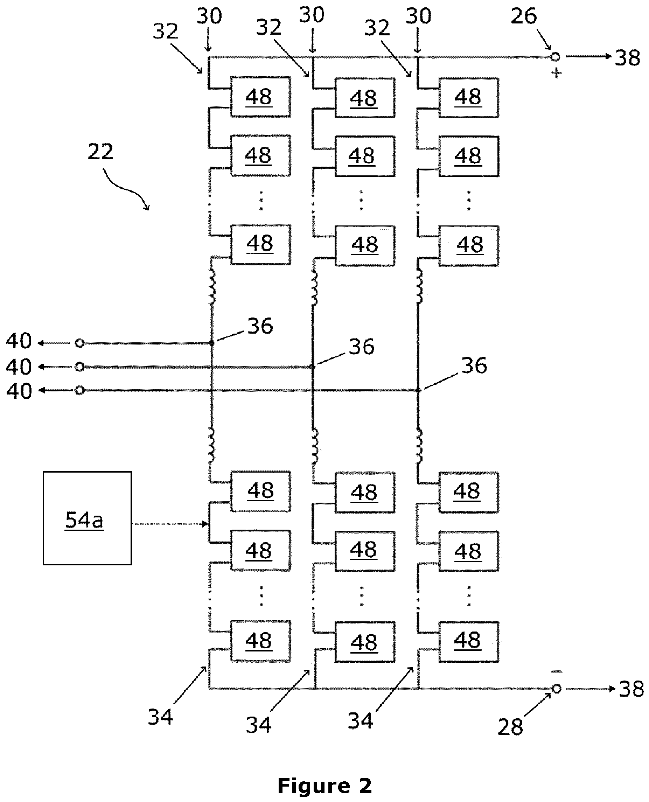

Figure 2 shows an exemplary configuration of the voltage source converter 22. The voltage source converter 22 includes first and second DC terminals 26,28 and a plurality of converter limbs 30. Each converter limb 30 extends between the first and second DC terminals 26,28 and includes first and second limb portions 32,34 separated by a respective AC terminal 36. In each converter limb 30, the first limb portion 32 extends between the first DC terminal 26 and the AC terminal 36, while the second limb portion 34 extends between the second DC terminal 28 and the AC terminal 36.

In use, the first and second DC terminals 26,28 of the voltage source converter 22 are respectively connected to a DC network 38. In use, the AC terminal 36 of each converter limb 30 of the voltage source converter 22 is connected to a respective AC phase 40 of a three-phase AC network 42 via the transformer 24. The three-phase AC network 42 is exemplarily an AC power grid.

The transformer 24 includes first and second transformer sides. A first transformer side 44 of the transformer 24 is connected to the AC terminals 36 of the voltage source converter 22. A second transformer side 46 of the transformer 24 is connected to the AC network 42. The transformer 24 includes a plurality of negative and positive taps and a tap changer operable to selectively connect to each tap to modify a turn ratio of the transformer 42. It will be appreciated that the transformer 24 may include one or more negative taps and one or more positive taps. It will also be appreciated that the transformer 24 may include only one or more negative taps, or may include only one or more positive taps depending on the requirements of the electrical assembly 20.

Each limb portion 32,34 includes a switching valve, which includes a chain-link converter that is defined by a plurality of series-connected modules 48.

Each module 48 may vary in topology, examples of which are described as follows.

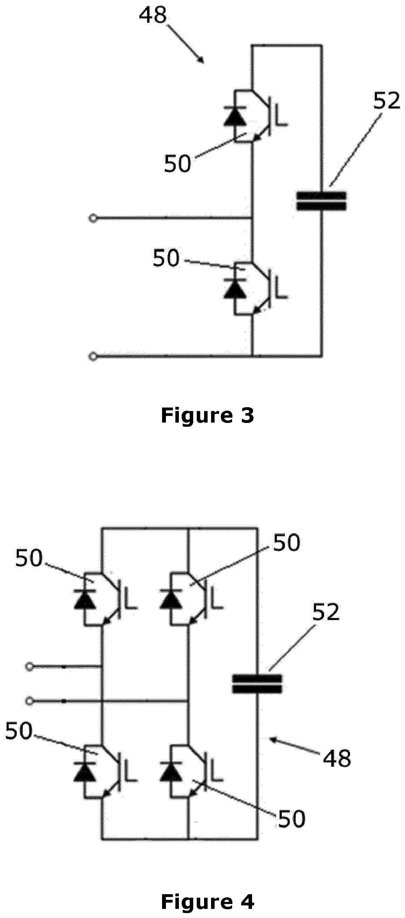

Figure 3 shows schematically the structure of an exemplary module 48 in the form of a half-bridge module 48. The half-bridge module 48 includes a pair of switching elements 50 and a capacitor 52. Each switching element 50 of the half-bridge module 48 is in the form of an IGBT which is connected in parallel with an anti-parallel diode. The pair of switching elements 50 are connected in parallel with the capacitor 52 in a half-bridge arrangement to define a 2-quadrant unipolar module 48 that can provide zero or positive voltage and can conduct current in both directions.

Figure 4 shows schematically the structure of an exemplary module 48 in the form of a full-bridge module 48. The full-bridge module 48 includes two pairs of switching elements 50 and a capacitor 52. Each switching element 50 of the full-bridge module 48 is in the form of an IGBT which is connected in parallel with an anti-parallel diode. The pairs of switching elements 50 are connected in parallel with the capacitor 52 in a full-bridge arrangement to define a 4-quadrant bipolar module 48 that can provide negative, zero or positive voltage and can conduct current in both directions.

The structure of a given module 48 includes the arrangement and type of switching elements 50 and energy storage device used in the given module 48. It will be appreciated that it is not essential for all of the modules 48 to have the same module 48 structure. For example, the plurality of modules 48 may comprise a combination of half-bridge modules 48 and full-bridge modules 48.

It is envisaged that, in other embodiments of the invention, each switching element 50 of each module 48 may be replaced by a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated semiconductor device. It is also envisaged that, in other embodiments of the invention, each diode may be replaced by a plurality of series-connected diodes.

The capacitor 52 of each module 48 is selectively bypassed or inserted into the corresponding chain-link converter by changing the states of the switching elements 50. This selectively directs current through the capacitor 52 or causes current to bypass the capacitor 52, so that the module 48 provides a zero or non-zero voltage.

The capacitor 52 of the module 48 is bypassed when the switching elements 50 in the module 48 are configured to form a short circuit in the module 48, whereby the short circuit bypasses the capacitor 52. This causes current in the corresponding chain-link converter to pass through the short circuit and bypass the capacitor 52, and so the module 48 provides a zero voltage, i.e. the module 48 is configured in a bypassed mode.

The capacitor 52 of the module 48 is inserted into the corresponding chain-link converter when the switching elements 50 in the module 48 are configured to allow the current in the corresponding chain-link converter to flow into and out of the capacitor 52. The capacitor 52 then charges or discharges its stored energy so as to provide a non-zero voltage, i.e. the module 48 is configured in a non-bypassed mode.

In this manner the switching elements 50 in each module 48 are switchable to control flow of current through the corresponding capacitor 52.

It is possible to build up a combined voltage across each chain-link converter, which is higher than the voltage available from each of its individual modules 48, via the insertion of the capacitors 52 of multiple modules 48, each providing its own voltage, into each chain-link converter. In this manner switching of the switching elements 50 in each module 48 causes each chain-link converter to provide a stepped variable voltage source, which permits the generation of a voltage waveform across each chain-link converter using a step-wise approximation. Hence, the switching elements 50 in each limb portion 32,34 are switchable to selectively permit and inhibit flow of current through the corresponding capacitor 52 in order to control a voltage across the corresponding limb portion.

It is envisaged that, in other embodiments of the invention, each module 48 may be replaced by another type of module which includes at least one switching element and at least one energy storage device, the or each switching element and the or each energy storage device in each such module arranged to be combinable to selectively provide a voltage source.

It is also envisaged that, in other embodiments of the invention, the capacitor 52 in each module 48 may be replaced by another type of energy storage device which is capable of storing and releasing energy to provide a voltage, e.g. a battery or a fuel cell.

The voltage source converter 22 further includes a converter controller 54a configured, e.g. programmed, to control the switching of the switching elements 50, and a tap changer controller 54b to control the tap changer to selectively connect to a selected one of the taps to modify a turn ratio of the transformer 42.

For the purposes of simplicity, each controller 54a,54b is exemplarily described with reference to its implementation as a single control unit. In other embodiments, the converter controller 54a may be implemented as a plurality of control units. The configuration of the converter controller 54a may vary depending on specific requirements of the voltage source converter 22. For example, the converter controller 54a may include a plurality of control units, each of which is configured to control the switching of the switching elements 50 of a respective one of the modules 48. Each control unit may be configured to be internal to, or external of, the corresponding module 48. Alternatively, the converter controller 54a may include a combination of one or more control units internal to the corresponding module 48 and one or more control units external of the corresponding module 48. Each control unit may be configured to communicate with at least one other control unit via telecommunications links and/or via a central control unit. Each control unit may be configured to communicate with a central control unit via telecommunications links.

Operation of the electrical assembly 20 is described as follows.

In order to transfer power between the DC and AC networks 38,42, the converter controller 54b controls the switching of the switching elements 50 of the modules 48 to switch the capacitors 52 of the respective limb portions 32,34 into and out of circuit between the respective DC and AC terminals 26,28,36 to interconnect the DC and AC networks 38,42. The converter controller 54a switches the switching elements 50 of the modules 48 of each limb portion 32,34 to provide a stepped variable voltage source between the respective DC and AC terminals 26,28,36 and thereby generate a voltage waveform so as to control the configuration of an AC voltage waveform at the corresponding AC terminal 36 to facilitate the transfer of power between the DC and AC networks 38,42. The transformer 24 is configured to step up the AC voltage of the AC network 42 so that the AC voltage at the first transformer side 44 ("converter side voltage") is higher than the AC voltage at the second transformer side 46 ("grid side voltage").

The electrical assembly 20 may experience an abnormal operating state that prevents it from carrying out its normal operation in accordance with its ratings.

An exemplary abnormal operating state of the electrical assembly 20 is the failure of one or more of the modules 48.

As mentioned above, the voltage source converter 22 includes six limb portions 32,34, each of which contains a plurality of series-connected modules 48. The number of modules 48 in each limb portion 32,34 is determined primarily by the voltage to be applied across the limb portion. For example, if 100kV is the applied voltage and each module 48 is rated for 2kV, then the limb portion 26,28 would require fifty modules 48 to support the applied voltage. In the event of one or more failed modules, the voltage source converter 22 is no longer capable of supporting the applied voltage and hence would be required to be shut down or disconnected to avoid further damage.

To improve reliability, some additional modules 48 may be added for redundancy. For example, if 100kV is the applied voltage and each module 48 is rated for 2kV, a 10% redundancy would add five modules 48 for a total of fifty-five modules 48 per limb portion 32,34. Thus, even if five or fewer modules fail, the corresponding limb portion 32,34 and therefore the voltage source converter 22 can continue to operate at full voltage and power. However, if the number of failed modules 48 is larger than the added redundancy, the corresponding limb portion 32,34 and therefore the voltage source converter 22 cannot continue to operate at full voltage and power, thus requiring shut down or disconnection of the voltage source converter 22.

To ensure continued availability of the voltage source converter 22, the tap changer controller 54b is configured to operate the tap changer of the transformer 24 as follows. In response to the failure of one or more modules 48, the tap changer controller 54b operates the tap changer in an AC voltage modification mode to connect to one of the negative taps to modify the turn ratio of the transformer 24 so as to reduce an AC voltage at the first transformer side 44. This is so that the AC voltage at the first transformer side 44 matches the reduced working voltage of the voltage source converter 22 due to the failed module(s). Different reductions in the AC voltage at the first transformer side 44 is achieved by selecting the appropriate negative tap for connection to the tap changer.

The tap changer controller 54b may be configured to selectively operate the tap changer in the AC voltage modification mode to connect with the selected negative tap so as to reduce the AC voltage at the first transformer side 44 as a function of a number of healthy modules 48 or as a function of a number of failed modules 48. This enables the AC voltage at the first transformer side 44 to be reduced proportionately based on the number of remaining healthy modules 48 so that the AC voltage at the first transformer side 44 matches the reduced working voltage of the voltage source converter 22.

Preferably, if a redundant module 48 is available to replace a failed module 48 so that the voltage source converter 22 is able to continue operating at its full voltage, the tap changer controller 54b does not initiate the AC voltage modification mode. When the number of failed modules 48 exceeds the number of available redundant modules 48, the tap changer controller 54b then initiates the AC voltage modification mode to reduce the AC voltage at the first transformer side 44.

As a result of the AC voltage modification mode, the voltage source converter 22 can continue to operate in reduced power conditions, thus obviating the need to shut down or disconnect the voltage source converter 22 during the abnormal operating state of the electrical assembly 20.

The redundant modules 48 may be omitted from each limb portion 32,34 of the voltage source converter 22. This is because the continued availability of the voltage source converter 22 is ensured by the ability to control the tap changer to reduce the AC voltage at the first transformer side 44 in response to module failure, thus removing the need for the back-up redundant modules 48. Reducing the overall number of modules 48 in each limb portion 32,34 reduces the overall costs and losses of the limb portions 32,34 and therefore the voltage source converter 22.

Another exemplary abnormal operating state of the electrical assembly 20 is a fault condition of the electrical assembly 20 that results in a demand for power overload.

To enable the voltage source converter 22 to respond to the power overload demand, the tap changer controller 54b is configured to operate the tap changer of the transformer 24 as follows.

In response to the power overload demand, the tap changer controller 54b operates the tap changer in an AC voltage modification mode to connect to one of the positive taps to modify the turn ratio of the transformer 24 so as to increase an AC voltage at the first transformer side 44.

When one or more healthy redundant modules 48 are available, the tap changer controller 54b is configured to selectively operate the tap changer in the AC voltage modification mode to connect with the selected positive tap so as to increase the AC voltage at the first transformer side 44 as a function of a number of healthy nominal and redundant modules 48. In this way the voltage source converter 22 can be operated, making use of the healthy nominal and redundant modules 48, to facilitate a proportional increase in output power to meet the power overload demand. Different increases in the AC voltage at the first transformer side 44 is achieved by selecting the appropriate positive tap for connection to the tap changer.

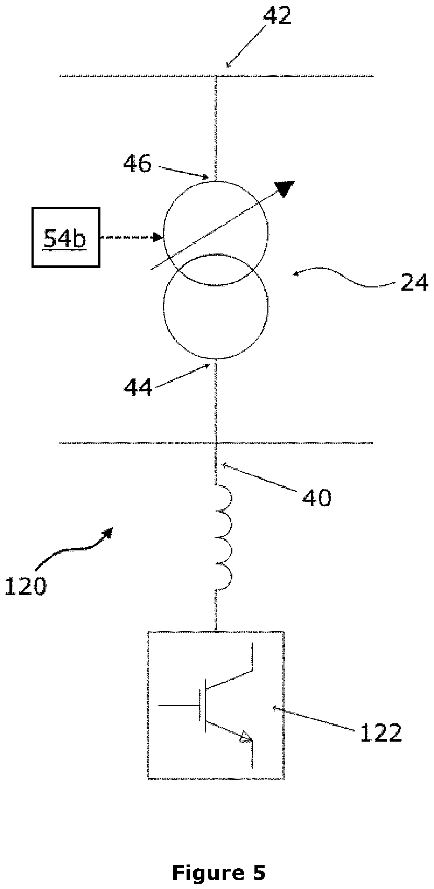

An electrical assembly according to a second embodiment of the invention is shown in Figure 5 and is designated generally by the reference numeral 120. The electrical assembly 120 of Figure 5 is similar in structure and operation to the electrical assembly 20 of Figure 1 and like feature share the same reference numerals.

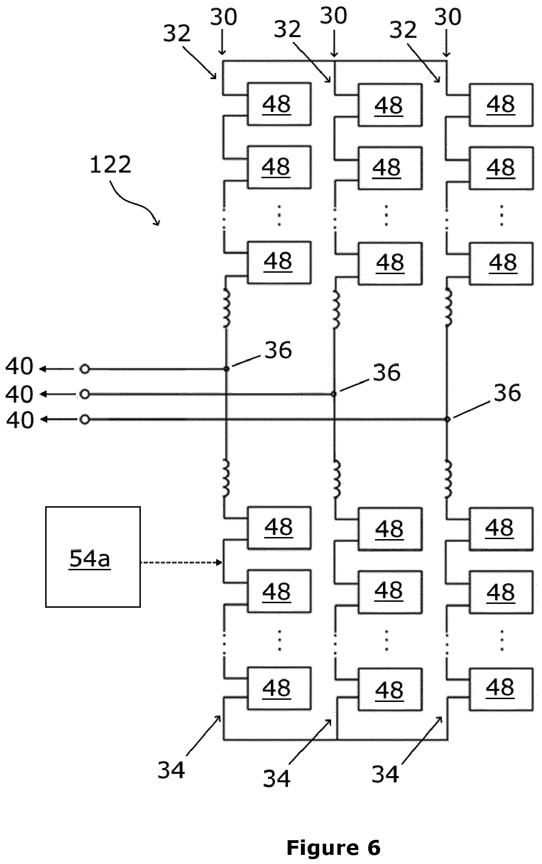

The electrical assembly 120 of Figure 5 differs from the electrical assembly 20 of Figure 1 in that the electrical assembly 120 of Figure 5 includes a static synchronous compensator 122 in place of the voltage source converter 22. Figure 6 shows the static synchronous compensator 122. The static synchronous compensator 122 is similar in structure and operation to the voltage source converter 22 but the static synchronous compensator 122 does not include any DC terminal that is connected to a DC network. The AC terminals 36 of the static synchronous compensator 122 are connected in shunt to the AC network 42 via the transformer 24.

The static synchronous compensator 122 has a "double-wye" configuration in Figure 5 but may have other configurations in other embodiments, such as a "delta" configuration or a "wye" configuration.

In order to provide support to the AC network 42 such as reactive power control and voltage regulation, the converter controller 54a controls the switching of the switching elements 50 of the modules 48 to switch the capacitors 52 of the respective limb portions 32,34 into and out of circuit with respect to the converter limbs 30. The tap converter controller 54a switches the switching elements 50 of the modules 48 of each limb portion 32,34 to provide a stepped variable voltage source and thereby generate a voltage waveform so as to control the configuration of an AC voltage waveform at the corresponding AC terminal 36 to facilitate the static synchronous compensator operation. The transformer 24 is configured to step up the AC voltage of the AC network 42 so that the AC voltage at the first transformer side 44 ("compensator side voltage") is higher than the AC voltage at the second transformer side 46 ("grid side voltage").

The features and benefits of the AC voltage modification mode described above with reference to the electrical assembly 20 of Figure 1 applies mutatis mutandis to the electrical assembly 120 of Figure 5.

Table 1 below illustrates an exemplary operation of the tap changer in an AC voltage modification mode to reduce the AC voltage at the first transformer side 44. In this example, the static synchronous compensator 122 is a +/-100 MVAr 420kV STATCOM, with a +0/-35% tap changer. The negative taps of the transformer 24 are configured to permit voltage reductions in steps of -2.5%. Each limb portion 32,34 has forty nominal modules 48 and four redundant modules 48.

Full power operation of the static synchronous compensator 122 is available with forty-one healthy modules 48 or higher. In the AC voltage modification mode, the tap changer is operated to connect to a negative tap to reduce the AC voltage at the first transformer side 44 and thereby reduce the power range of the static synchronous compensator 122. For each further failed module 48, the tap changer is operated to connect to the next negative tap to further reduce the AC voltage at the first transformer side 44 and the power range of the static synchronous compensator 122. The electrical assembly 120 is configured to operate in the AC voltage modification mode up to the point where the static synchronous compensator 122 has twenty-six healthy modules 48 at -35% tap at reduced power of +/-65 MVAr. When the number of healthy modules 48 drops to twenty-five healthy modules 38 or lower, the electrical assembly 120 is designed to trip because it is not possible for the tap changer to make any further reductions of the AC voltage at the first transformer side 44.

**Table 1**

| **Healthy modules** | **Failed modules** | **Power range (+/-MVAr)** | **Negative tap (%)** |
|---|---|---|---|
| 40 nominal + 4 redundant | 0 | 100 | 0 |
| 40 nominal + 3 redundant | 1 | 100 | 0 |
| 40 nominal + 2 redundant | 2 | 100 | 0 |
| 40 nominal + 1 redundant | 3 | 100 | 0 |
| 39 nominal + 1 redundant | 4 | 97.5 | -2.5 |
| 38 nominal + 1 redundant | 5 | 95 | -5 |
| 37 nominal + 1 redundant | 6 | 92.5 | -7.5 |
| 36 nominal + 1 redundant | 7 | 90 | -10 |
| 35 nominal + 1 redundant | 8 | 87.5 | -12.5 |
| 34 nominal + 1 redundant | 9 | 85 | -15 |
| 33 nominal + 1 redundant | 10 | 82.5 | -17.5 |
| 32 nominal + 1 redundant | 11 | 80 | -20 |
| 31 nominal + 1 redundant | 12 | 77.5 | -22.5 |
| 30 nominal + 1 redundant | 13 | 75 | -25 |
| 29 nominal + 1 redundant | 14 | 72.5 | -27.5 |
| 28 nominal + 1 redundant | 15 | 70 | -30 |
| 27 nominal + 1 redundant | 16 | 67.5 | -32.5 |
| 26 nominal + 1 redundant | 17 | 65 | -35 |
| 26 nominal + 0 redundant | 18 | 65 | -35 |
| 25 nominal + 0 redundant | 19 | Trip | |

The trip level of the electrical assembly 120 may be varied by increasing or decreasing the AC voltage reduction range of the tap changer.

If desired, it is possible to operate the static synchronous compensator 122 in a power overload mode by adding one or more positive taps to the transformer 24 and by connecting the tap changer to a positive tap to make use of the healthy nominal and redundant modules 48.

Table 2 below illustrates another exemplary operation of the tap changer in an AC voltage modification mode to reduce the AC voltage at the first transformer side 44. In this example, the static synchronous compensator 122 is a +/-100 MVAr 400kV STATCOM, with a +0/-7.5% tap changer. The negative taps of the transformer 24 are configured to permit voltage reductions in steps of -2.5%. Each limb portion 32,34 has forty nominal modules 48 and one redundant module 48.

Full power operation of the static synchronous compensator 122 is available with forty-one healthy modules 48. In the AC voltage modification mode, the tap changer is operated to connect to a negative tap to reduce the AC voltage at the first transformer side 44 and thereby reduce the power range of the static synchronous compensator 122. For each further failed module 48, the tap changer is operated to connect to the next negative tap to further reduce the AC voltage at the first transformer side 44 and the power range of the static synchronous compensator 122. The electrical assembly 120 is configured to operate in the AC voltage modification mode up to the point where the static synchronous compensator 122 has thirty-seven healthy modules 48 at -7.5% tap at reduced power of +/-92.5 MVAr. When the number of healthy modules 48 drops to thirty-six healthy modules 48 or lower, the electrical assembly 120 is designed to trip because it is not possible for the tap changer to make any further reductions of the AC voltage at the first transformer side 44.

**Table 2**

| **Healthy modules** | **Failed modules** | **Power range (+/-MVAr)** | **Negative tap (%)** |
|---|---|---|---|
| 40 nominal + 1 redundant | 0 | 100 | 0 |
| 39 nominal + 1 redundant | 1 | 97.5 | -2.5 |
| 38 nominal + 1 redundant | 2 | 95 | -5 |
| 37 nominal + 1 redundant | 3 | 92.5 | -7.5 |
| 37 nominal + 0 redundant | 4 | 92.5 | -7.5 |
| 36 nominal + 0 redundant | 5 | Trip | |

It will be appreciated that the above numerical values are merely intended to help illustrate the working of the invention and may vary depending on the requirements of the electrical assembly and the power application.

The listing or discussion of an apparently prior-published document or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. An electrical assembly (20,120) comprising:
a converter-based electrical device (22,122); and
a transformer (24) for connecting the converter-based electrical device (22,122) to an AC electrical network (42), a first transformer side (44) of the transformer (24) connected to the converter-based electrical device (22,122), a second transformer side (46) of the transformer (24) for connection to the AC electrical network (42), the transformer (24) including a plurality of taps, the transformer (24) including a tap changer operable to selectively connect to the or each tap to modify a turn ratio of the transformer (24),
wherein the transformer (24) includes a controller (54b) configured to selectively operate the tap changer in an AC voltage modification mode, responsive to an abnormal operating state of the electrical assembly (20,120), to modify the turn ratio of the transformer (24) so as to modify an AC voltage at the first transformer side (44).

2. An electrical assembly (20,120) according to Claim 1 wherein the abnormal operating state of the electrical assembly (20,120) includes a modified working voltage of the converter-based electrical device (22,122), and the controller (54b) is configured to selectively operate the tap changer in the AC voltage modification mode to modify the turn ratio of the transformer (24) so as to modify the AC voltage at the first transformer side (44) to correspond to the modified working voltage of the converter-based electrical device (22,122).

3. An electrical assembly (20,120) according to any one of the preceding claims wherein the converter-based electrical device (22,122) includes a plurality of modules (48), each module (48) including at least one switching element (50).

4. An electrical assembly (20,120) according to Claim 3 wherein each module (48) includes at least one switching element (50) and at least one energy storage device (52), the or each switching element (50) and the or each energy storage device (52) in each module (48) arranged to be combinable to selectively provide a voltage source.

5. An electrical assembly (20,120) according to Claim 3 or Claim 4 wherein the abnormal operating state of the electrical assembly (20,120) includes a failure of one or more of the modules (48) of the converter-based electrical device (22,122).

6. An electrical assembly (20,120) according to any one of the preceding claims wherein the transformer (24) includes one or more negative taps, the tap-changer is operable to selectively connect to the or each negative tap to modify a turn ratio of the transformer (24), and the controller (54b) is configured to selectively operate the tap changer in the AC voltage modification mode to connect with a selected negative tap so as to reduce the AC voltage at the first transformer side (44).

7. An electrical assembly (20,120) according to Claim 6 when dependent from any one of Claims 3 to 5, wherein the controller (54b) is configured to selectively operate the tap changer in the AC voltage modification mode to connect with the selected negative tap so as to reduce the AC voltage at the first transformer side (44) as a function of a number of healthy modules (48) in the converter-based electrical device (22,122).

8. An electrical assembly (20,120) according to Claim 6 or Claim 7 when either claim is dependent from any one of Claims 3 to 5, wherein the controller (54b) is configured to selectively operate the tap changer in the AC voltage modification mode to connect with the selected negative tap so as to reduce the AC voltage at the first transformer side (44) as a function of a number of failed modules (48) in the converter-based electrical device (22,122).

9. An electrical assembly (20,120) according to Claim 8 wherein the controller (54b) is configured to selectively operate the tap changer in the AC voltage modification mode to connect with the selected negative tap so as to reduce the AC voltage at the first transformer side (44) when the plurality of modules (48) includes at least one redundant module (48) and the number of failed modules (48) in the converter-based electrical device (22,122) exceeds a number of redundant modules (48) in the converter-based electrical device (22,122).

10. An electrical assembly (20,120) according to any one of the preceding claims wherein the abnormal operating state of the electrical assembly (20,120) includes a power overload demand.

11. An electrical assembly (20,120) according to any one of the preceding claims wherein the transformer (24) includes one or more positive taps, the tap-changer is operable to selectively connect to the or each positive tap to modify a turn ratio of the transformer (24), and the controller (54b) is configured to selectively operate the tap changer in the AC voltage modification mode to connect with a selected positive tap so as to increase the AC voltage at the first transformer side (44).

12. An electrical assembly (20,120) according to Claim 11 when dependent from any one of Claims 3 to 5, wherein the controller (54b) is configured to selectively operate the tap changer in the AC voltage modification mode to connect with the selected positive tap so as to increase the AC voltage at the first transformer side (44) as a function of a number of healthy modules (48) in the converter-based electrical device (22,122) when the plurality of modules (48) includes at least one redundant module (48).

13. An electrical assembly (20,120) according to any one of the preceding claims wherein the controller (54b) is configured to selectively operate the tap changer in the AC voltage modification mode, responsive to one or more changes in the abnormal operating state of the electrical assembly (20,120), to modify the turn ratio of the transformer (24) so as to further modify the AC voltage at the first transformer side (44).

14. An electrical assembly (20,120) according to any one of the preceding claims wherein the converter-based electrical device (22,122) is or includes: a voltage source converter for interconnecting electrical network (42)s; or a static synchronous compensator for connection to an AC electrical network (42).

15. A method of operating an electrical assembly (20,120), the electrical assembly (20,120) comprising:
a converter-based electrical device (22,122); and
a transformer (24) for connecting the converter-based electrical device (22,122) to an AC electrical network (42), a first transformer side (44) of the transformer (24) connected to the converter-based electrical device (22,122), a second transformer side (46) of the transformer (24) for connection to the AC electrical network (42), the transformer (24) including a plurality of taps, the transformer (24) including a tap changer operable to selectively connect to the or each tap to modify a turn ratio of the transformer (24),
wherein the method comprises the step of selectively operating the tap changer in an AC voltage modification mode, responsive to an abnormal operating state of the electrical assembly (20,120), to modify the turn ratio of the transformer (24) so as to modify an AC voltage at the first transformer side (44).
